Europäisches Patentamt

European Patent Office

Office européen des brevets

(19)

(11) **EP 1 233 208 A1**

(12) **DEMANDE DE BREVET EUROPEEN**

(43) Date de publication:
**21.08.2002 Bulletin 2002/34**

(51) Int Cl.⁷: **F16H 3/66**

(21) Numéro de dépôt: **02290348.8**

(22) Date de dépôt: **13.02.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **16.02.2001 FR 0102121**

(71) Demandeur: **Flamme, Jean Marie**
**7322 Ville-Pommeroeul (BE)**

(72) Inventeur: **Flamme, Jean Marie**
**7322 Ville-Pommeroeul (BE)**

(74) Mandataire: **Abello, Michel**
**Cabinet Peuscet,**
**78, avenue Raymond Poincaré**
**75116 Paris (FR)**

(54) **Boite de vitesses pour vehicule automobile a deux arbres secondaires et a six rapports de marche avant au moins**

(57)     La présente invention concerne une boîte de vitesses pour véhicule automobile, comportant un arbre primaire (1), deux arbres secondaires (2) (3), des engrenages à axes parallèles (10) ainsi qu'un train d'engrenages planétaires à trois organes indépendants(70). Cette boîte de vitesses fournit de six à neuf rapports de vitesses en marche avant, selon les modes particuliers de réalisation. Elle offre l'avantage de comporter un nombre minimal de roues dentées (12) et d'embrayages (E0) et de fonctionner sans quasi-rupture de couple lors des changements de rapports. Elle est donc bien adaptée à la réalisation d'une boîte automatique à commande séquentielle. Compte tenu de son faible encombrement axial, cette boîte de vitesses est destinée à être implantée préférentiellement dans les véhicules à traction avant et à moteur transversal.

Fig. 2

EP 1 233 208 A1

Printed by Jouve, 75001 PARIS (FR)

**Description**

Champ de l'invention

La présente invention concerne une boîte de vitesses pour véhicule automobile, comportant un arbre primaire, deux arbres secondaires, un train d'engrenages à axes parallèles, un train d'engrenages planétaires à trois organes indépendants et au moins trois engrenages à axes parallèles. Cette boîte de vitesses fournit au moins six rapports de vitesses en marche avant.

Etat de la technique

Il existe des boîtes de vitesses pour véhicule automobile à six rapports de vitesses en marche avant comportant au moins un train planétaire à trois organes indépendants ainsi que des engrenages à axes parallèles. Ces boîtes de vitesses sont le plus souvent des boîtes automatiques.

L'une des boîtes de vitesses les plus intéressantes appartenant à cette catégorie est la boîte de vitesses qui fait l'objet du brevet US 5,106,352. Cette boîte à six rapports de vitesses en marche avant utilise deux trains planétaires à trois organes indépendants et elle est caractérisée par l'existence de deux chemins de puissance en entrée de boîte, disposés en amont des trains planétaires, chaque chemin de puissance servant à entraîner l'un au moins des trains planétaires. Ces chemins de puissance sont créés par deux engrenages à axes parallèles et à contact extérieur ou par un troisième train planétaire.

L'architecture de la boîte de vitesses décrite dans le brevet US 5,106,352 la prédispose à une installation longitudinale dans un véhicule à propulsion et à moteur longitudinal. Elle ne peut être implantée dans un véhicule à traction avant et moteur transversal qu'au prix d'une certaine complexité. Ainsi, la figure 15 dudit brevet montre une réalisation correspondant à une implantation de ce type, qui nécessite trois trains planétaires et qui comporte deux roues de renvoi pour conduire la puissance de sortie de la boîte du côté de son arbre d'entrée. Dans cette réalisation, la boîte de vitesses comporte de nombreux arbres creux ainsi que dix-sept roues dentées si on y inclut le pignon de sortie qui engrène avec la couronne du différentiel et si les trains planétaires comportent chacun trois satellites. En outre, sur un rapport de vitesses, il existe une circulation de puissance parasite, l'un des deux chemins de puissance doit fournir une puissance supérieure à la puissance de sortie de la boîte, l'autre chemin de puissance recevant une puissance résistante.

Lorsqu'il est réalisé à partir d'un engrenage à axes parallèles, l'un des chemins de puissance de la boîte de vitesses décrite dans le brevet US 5,106,352 réduit la vitesse d'entraînement du moteur et donc augmente le couple d'entrée des trains planétaires, ce qui conduit à un surdimensionnement de certains organes de la boîte de vitesses.

Description de l'invention

La présente invention a pour objet de proposer une boîte de vitesses dont l'architecture est mieux adaptée à un véhicule à traction avant et à moteur transversal que l'architecture proposée dans le brevet US 5,106,352. Cette architecture évite la circulation de puissance et la boîte correspondante comporte soit un nombre supérieur de rapports de vitesses en marche avant, soit un nombre identique de rapports de vitesses en marche avant, pour un nombre inférieur de roues dentées.

Selon cette architecture, la boîte de vitesses objet de l'invention comporte, outre un carter et des moyens de guidage :

- un arbre primaire susceptible d'être entraîné par le moteur du véhicule, le plus souvent par l'intermédiaire d'un organe de couplage ;
- un premier et un deuxième arbres secondaires d'axes parallèles à l'axe de l'arbre primaire ;
- un premier et un deuxième pignons de sortie, le premier pignon de sortie étant entraîné en permanence par le premier arbre secondaire et le deuxième pignon de sortie étant entraîné en permanence par le deuxième arbre secondaire, le rapport du nombre de dents du premier pignon de sortie au nombre de dents du deuxième pignon de sortie étant désigné par $\sigma_0$ ;
- un train planétaire à roues dentées cylindriques, coaxial à l'arbre primaire, constitué de trois organes indépendants, un planétaire, une couronne et un châssis porte satellites, de vitesses respectives $\omega_1$, $\omega_2$ et $\omega_3$, satisfaisant la relation cinématique suivante :

$$\omega_1 + k.\omega_2 = (1+k).\omega_3,$$

dans laquelle k désigne le rapport du nombre de dents de la couronne au nombre de dents du planétaire ;

- trois engrenages à axes parallèles et à contact extérieur,

  - le premier engrenage étant constitué d'une roue coaxiale à l'arbre primaire, dite première roue principale et d'une roue coaxiale au premier arbre secondaire, dite première roue secondaire, le rapport du nombre de dents de la première roue secondaire au nombre de dents de la première roue principale étant désigné par $\sigma_1$ ;

  - le deuxième engrenage étant constitué d'une roue coaxiale à l'arbre primaire, dite deuxième roue principale et d'une roue coaxiale au deuxième arbre secondaire, dite deuxième roue secondaire, le rapport du nombre de dents de la deuxième roue secondaire au nombre de dents de la deuxième roue principale étant désigné par $\sigma_2$ ;

  - le troisième engrenage étant constitué d'une roue coaxiale à l'arbre primaire, dite troisième roue principale et d'une roue coaxiale au premier arbre secondaire, dite troisième roue secondaire, le rapport du nombre de dents de la troisième roue secondaire au nombre de dents de la troisième roue principale étant désigné par $\sigma_3$ ;

- un train d'engrenages à axes parallèles, constitué d'une roue coaxiale à l'arbre primaire, dite quatrième roue principale, d'une roue coaxiale à l'un des arbres secondaires, dite quatrième roue secondaire, et d'une roue d'axe parallèle aux axes des arbres primaires et secondaires, dite roue intermédiaire, susceptible d'engrener simultanément par contact extérieur avec la quatrième roue principale et avec la quatrième roue secondaire, le rapport changé de signe, du nombre de dents de la quatrième roue secondaire au nombre de dents de la quatrième roue principale étant désigné par $\sigma_4$ ;
- quatre embrayages ;
- un dispositif d'accouplement non permanent ;
- une roue libre ;

La boîte de vitesses objet de l'invention présente les caractéristiques suivantes :

- l'arbre primaire entraîne en permanence le châssis porte satellites ;
- la première roue principale est entraînée par la couronne, la première roue secondaire entraîne l'organe d'entrée du premier embrayage, l'organe de sortie de cet embrayage est solidaire du premier arbre secondaire ;
- la troisième roue principale est entraînée par le planétaire, la troisième roue secondaire entraîne l'organe d'entrée du troisième embrayage, l'organe de sortie de cet embrayage est solidaire du premier arbre secondaire ;
- la roue libre limite la vitesse de rotation de la troisième roue secondaire à la vitesse de rotation de la première roue secondaire ;
- la fermeture du deuxième embrayage assure l'entraînement du deuxième arbre secondaire à partir de la couronne, par l'intermédiaire du deuxième engrenage à axes parallèles ;
- la fermeture du quatrième embrayage solidarise en rotation deux des organes du train planétaire ;
- l'action du dispositif d'accouplement non permanent assure l'entraînement de l'un des arbres secondaires à partir de l'un des organes indépendants du train planétaire autre que le porte satellites, par l'intermédiaire du quatrième engrenage à axes parallèles ;
- les nombres de dents des roues des engrenages à axes parallèles sont choisis pour satisfaire la relation suivante : $\sigma_1 < \sigma_3 < \Sigma_2 = \sigma_2 . \sigma_0$ ;

de manière à former sept chemins de puissance au départ de l'arbre primaire vers l'un au moins des pignons de sortie,

- un premier chemin de puissance étant obtenu par la fermeture du deuxième embrayage ainsi que par l'action de la roue libre, et fournissant un premier rapport de vitesses en marche avant égal à $(k+1).[\sigma_1 / \Sigma_2] / (k.\sigma_1 + \sigma_3)$ ;
- un deuxième chemin de puissance étant obtenu par les fermetures du deuxième embrayage ainsi que du quatrième embrayage et fournissant un deuxième rapport de vitesses en marche avant égal à $(1/\Sigma_2)$ ;
- un troisième chemin de puissance étant obtenu par les fermetures du deuxième embrayage ainsi que du troisième embrayage et fournissant un troisième rapport de vitesses en marche avant égal à $(k+1) / (k.\Sigma_2 + \sigma_3)$ ;
- un quatrième chemin de puissance étant obtenu par les fermetures du quatrième embrayage ainsi que du troisième embrayage et fournissant un quatrième rapport de vitesses en marche avant égal à $(1/\sigma_3)$ ;
- un cinquième chemin de puissance étant obtenu par les fermetures du troisième embrayage et du premier embrayage ainsi que par l'action de la roue libre, ce chemin de puissance se dédoublant entre le train planétaire et le premier arbre secondaire et fournissant un cinquième rapport de vitesses en marche avant égal à $(k+1) / (k.\sigma_1 + \sigma_3)$ ;

- un sixième chemin de puissance étant obtenu par les fermetures du premier embrayage ainsi que du quatrième embrayage et fournissant un sixième rapport de vitesses en marche avant égal à $(1/\sigma_1)$ ;
- un septième chemin de puissance étant obtenu par la fermeture du quatrième embrayage ainsi que par l'action du dispositif d'accouplement non permanent et fournissant un rapport de vitesses en marche arrière égal à $(1/\Sigma_4)$, avec $\Sigma_4 = \sigma_4$ ou $\Sigma_4 = \sigma_4.\sigma_0$ selon que le premier pignon de sortie ou le deuxième pignon de sortie est le terme de ce chemin ;

tout rapport de vitesses étant défini comme le rapport de la vitesse du premier pignon de sortie à la vitesse de l'arbre primaire.

On observera que la boîte de vitesses objet de l'invention correspondant à cette architecture de base comporte seize roues dentées si on y inclut les deux pignons de sortie et si le train planétaire comporte trois satellites. Il est toutefois possible de réduire à quinze le nombre de roues dentées de deux manières auxquelles correspondent deux variantes de l'architecture de la boîte de vitesses objet de l'invention.
Selon la première variante :

- la deuxième roue principale s'identifie à la première roue principale ;
- la deuxième roue secondaire entraîne l'organe d'entrée du deuxième embrayage ;
- l'organe de sortie du deuxième embrayage est solidaire du deuxième arbre secondaire.

Selon la deuxième variante, il suffit :

- la quatrième roue principale s'identifie à la troisième roue principale ;
- la quatrième roue secondaire entraîne l'organe d'entrée du dispositif d'accouplement temporaire ;
- l'organe de sortie du dispositif d'accouplement temporaire est solidaire du deuxième arbre secondaire.

Il est également possible de réduire à quatorze le nombre de roues dentées, en combinant ces deux variantes.
Que la boîte de vitesses objet de l'invention soit réalisée selon l'architecture de base précisée aux paragraphes [0007] et [0008] ou selon ses variantes telles qu'exposées au paragraphe [0009], son mode de fonctionnement est le suivant :

- le véhicule est au point mort lorsque tous les embrayages sont ouverts et lorsque le dispositif d'accouplement non permanent est hors d'action ;
- le véhicule est mis en marche arrière à partir du point mort, par l'engagement du dispositif d'accouplement non permanent suivi de la fermeture du quatrième embrayage, le retour au point mort étant réalisé par l'ouverture du quatrième embrayage suivie du dégagement du dispositif d'accouplement temporaire ;
- le véhicule est mis en marche avant à partir du point mort, selon le premier rapport, par la seule fermeture du deuxième embrayage. Il peut être mis en marche avant à partir du point mort, selon le deuxième rapport, par la fermeture du deuxième embrayage suivie de la fermeture du quatrième embrayage ;
- le passage du premier rapport au deuxième ou au troisième rapport est réalisé par le maintien de la fermeture du deuxième embrayage et par la fermeture quasi-simultanée du quatrième ou du troisième embrayage selon le cas ;
- le passage du deuxième rapport au troisième ou au quatrième rapport est réalisé par le maintien de la fermeture du deuxième ou du quatrième embrayage selon le cas, par l'ouverture du quatrième ou du deuxième embrayage selon le cas et par la fermeture quasi-simultanée du troisième embrayage ;
- le passage du troisième rapport au quatrième ou au cinquième rapport est réalisé par le maintien de la fermeture du troisième embrayage, par l'ouverture du deuxième embrayage et par la fermeture quasi-simultanée du quatrième ou du premier embrayage selon le cas ;
- le passage du quatrième rapport au cinquième ou au sixième rapport est réalisé par le maintien de la fermeture du troisième ou du quatrième embrayage selon le cas, par l'ouverture du quatrième ou du troisième embrayage selon le cas et par la fermeture quasi-simultanée du premier embrayage ;
- le passage du cinquième rapport au sixième rapport est réalisé par le maintien de la fermeture du premier embrayage, par l'ouverture du troisième embrayage et par la fermeture quasi-simultanée du quatrième embrayage ;
- le passage du sixième rapport au cinquième ou au quatrième rapport est réalisé par le maintien de la fermeture du premier ou du quatrième embrayage selon le cas, par l'ouverture du quatrième ou du premier embrayage selon le cas et par la fermeture quasi-simultanée du troisième embrayage ;
- le passage du cinquième rapport au quatrième ou au troisième rapport est réalisé par le maintien de la fermeture du troisième embrayage, par l'ouverture du premier embrayage et par la fermeture quasi-simultanée du quatrième ou du deuxième embrayage selon le cas ;
- le passage du quatrième rapport au troisième ou au deuxième rapport est réalisé par le maintien de la fermeture du troisième ou du quatrième embrayage selon le cas, par l'ouverture du quatrième ou du troisième embrayage selon le cas et par la fermeture quasi-simultanée du deuxième embrayage ;

- le passage du troisième rapport au deuxième rapport est réalisé par le maintien de la fermeture du deuxième embrayage, par l'ouverture du troisième embrayage et par la fermeture quasi-simultanée du quatrième embrayage ;
- le passage du troisième rapport au premier rapport est réalisé par le maintien de la fermeture du deuxième embrayage et par l'ouverture du troisième embrayage ;
- le passage du deuxième rapport au premier rapport est réalisé par le maintien de la fermeture du deuxième embrayage et par l'ouverture du quatrième embrayage ;
- le passage du deuxième rapport au point mort est réalisé par l'ouverture des deuxième et quatrième embrayages ;
- le passage du premier rapport au point mort est réalisé par l'ouverture du deuxième embrayage.

On peut observer que tous les passages de vitesses en marche avant, entre deux rapports immédiatement successifs ou entre deux rapports successifs séparés par un rapport intermédiaire, sont réalisés par la manoeuvre de deux embrayages au plus. Ceci facilite les changements de rapports qui peuvent être effectués sans quasi-rupture de couple, avec une commande simple des embrayages et rend aisée une commande séquentielle de la boîte de vitesses.

Que la boîte de vitesses objet de l'invention soit réalisée selon l'architecture de base précisée aux paragraphes [0007] et [0008] ou selon ses variantes telles qu'exposées au paragraphe [0009], il est possible de lui ajouter des organes supplémentaires, de manière à augmenter le nombre de rapports de vitesses en marche avant ainsi que l'ouverture de boîte. Cet ajout peut être réalisé essentiellement de deux manières différentes qui peuvent d'ailleurs être combinées.

Selon une première manière, la boîte de vitesses objet de l'invention comporte en outre un frein dont l'action assure le blocage du planétaire, de manière à fournir deux chemins de puissance supplémentaires vers les pignons de sortie. L'un de ces chemins de puissance supplémentaires est obtenu par l'action du frein ainsi que par la fermeture du premier embrayage et fournit un rapport de vitesses en marche avant égal à $(k+1) / (k.\sigma_1)$. L'autre chemin de puissance supplémentaire est obtenu par l'action du frein ainsi que par la fermeture du deuxième embrayage et fournit un autre rapport de vitesses en marche avant égal à $(k+1) / (k.\Sigma_2)$.

Selon une deuxième manière, la boîte de vitesses objet de l'invention comporte en outre :

- un cinquième engrenage à axes parallèles et à contact extérieur dont l'une des roues dite cinquième roue principale est coaxiale à l'arbre primaire et dont l'autre roue dite cinquième roue secondaire est coaxiale à l'un des arbres secondaires, le rapport du nombre de dents de la cinquième roue secondaire au nombre de dents de la cinquième roue principale étant désigné par $\sigma_5$ ;
- ainsi qu'un cinquième embrayage dont la fermeture assure l'entraînement de l'arbre secondaire qui porte la cinquième roue secondaire, à partir de l'arbre primaire, par l'intermédiaire de ce cinquième engrenage ;

de manière à fournir un chemin de puissance supplémentaire vers l'un des pignons de sortie. Ce chemin de puissance est obtenu par l'action du cinquième embrayage et fournit un rapport de vitesses en marche avant égal à $(1/\Sigma_5)$, avec $\Sigma_5 = \sigma_5$ ou $\Sigma_5 = \sigma_5.\sigma_0$ selon que le premier pignon de sortie ou le deuxième pignon de sortie est le terme de ce chemin ; les nombres de dents des roues formant ce cinquième engrenage étant choisis de préférence pour satisfaire l'une des deux relations suivantes : $\Sigma_5 < \sigma_1$ ou $\sigma_3 < \Sigma_5 < [(k.\Sigma_2 + \sigma_3)/(k+1)]$.

Lorsque la boîte de vitesses objet de l'invention ne comporte comme organe supplémentaire qu'un frein, elle est à huit rapports de vitesses en marche avant. Six de ces rapports sont inchangés et restent qualifiés de premier à sixième rapports. Le mode de fonctionnement de la boîte de vitesses sur ces six rapports est identique à celui décrit au paragraphe [0010]. Le rapport supplémentaire fourni par la fermeture du premier embrayage et par l'action du frein est plus élevé que le sixième rapport. Il constitue un septième rapport. L'autre rapport supplémentaire fourni par la fermeture du deuxième embrayage et par l'action du frein est plus élevé que le troisième rapport, mais moins élevé que le quatrième rapport si $\Sigma_2 > \sigma_3.[1+(1/k)]$ et que le cinquième rapport si $\Sigma_2 > \sigma_1 + (\sigma_3/k)$.

Le passage du cinquième ou du sixième rapport au septième rapport est réalisé par le maintien de la fermeture du premier embrayage, par l'ouverture du troisième ou du quatrième embrayage selon le cas et par l'action quasi-simultanée du frein. De même le passage du septième rapport au sixième ou au cinquième rapport est réalisé par le maintien de la fermeture du premier embrayage, par l'ouverture du frein et par la fermeture quasi-simultanée du quatrième ou du troisième embrayage selon le cas.

Le passage du deuxième ou du troisième rapport au deuxième rapport supplémentaire est réalisé par le maintien de la fermeture du deuxième embrayage, par l'action du frein et par l'ouverture quasi-simultanée du quatrième ou du troisième embrayage selon le cas. De même, le passage du deuxième rapport supplémentaire au troisième ou au deuxième rapport est réalisé par le maintien de la fermeture du deuxième rapport, par l'ouverture du frein et par la fermeture quasi-simultanée du troisième ou du quatrième embrayage selon le cas.

Tous les changements de rapports envisagés aux paragraphes [0015] et [0016] sont réalisés avec la même facilité de commande des passages de vitesses que celle décrite plus haut au paragraphe [0010]. Par contre le passage du deuxième rapport supplémentaire au quatrième ou au cinquième rapport impose l'ouverture du frein et du deuxième embrayage ainsi que la fermeture quasi-simultanée du troisième embrayage et du quatrième ou du premier embrayage selon le cas. Le passage inverse du quatrième ou du cinquième rapport au deuxième rapport supplémentaire nécessite la fermeture du deuxième embrayage et l'action du frein ainsi que l'ouverture quasi-simultanée de deux embrayages. Le deuxième rapport supplémentaire doit par conséquent être considéré de préférence comme un rapport auxiliaire à n'utiliser que lorsque la vitesse du véhicule est volontairement limitée, par la sélection de la position L du levier de vitesses, comme cela est prévu classiquement sur les boîtes de vitesses automatiques.

Lorsque la boîte de vitesses objet de l'invention ne comporte comme organes supplémentaires qu'un cinquième engrenage à axes parallèles et un cinquième embrayage, elle est à sept rapports de vitesses en marche avant. Six rapports sont inchangés et restent qualifiés de premier à sixième rapports. Le mode de fonctionnement de la boîte de vitesses sur ces six rapports est identique à celui décrit au paragraphe [0010]. Le rapport supplémentaire est fourni par la seule fermeture du cinquième embrayage.

Lorsque les nombres de dents des roues formant ce cinquième engrenage sont tels que la relation suivante est vérifiée : $\sigma_3 < \Sigma_5 < [(k. \Sigma_2 + \sigma_3) /(k+1)]$, le rapport de vitesses supplémentaire est situé entre les troisième et quatrième rapports. Le passage du troisième rapport au rapport supplémentaire peut être réalisé en maintenant fermé le troisième embrayage, en ouvrant le deuxième embrayage et en fermant quasi-simultanément le cinquième embrayage. Le passage du quatrième rapport au rapport supplémentaire peut être réalisé en maintenant fermé le troisième embrayage, en ouvrant le quatrième embrayage et en fermant quasi-simultanément le cinquième embrayage. Le passage du rapport supplémentaire au quatrième rapport est réalisé en maintenant fermé le troisième embrayage, en ouvrant le cinquième embrayage et en fermant quasi-simultanément le quatrième embrayage. Le passage du rapport supplémentaire au troisième rapport est réalisé en maintenant fermé le troisième embrayage, en ouvrant le cinquième embrayage et en fermant quasi-simultanément le deuxième embrayage.

Lorsque les nombres de dents des roues formant ce cinquième engrenage sont tels que la relation suivante est vérifiée : $\Sigma_5 < \sigma_1$, ce rapport de vitesses supplémentaire est plus élevé que le sixième rapport. Il constitue un septième rapport de vitesses. Les passages du cinquième ou du sixième rapport au septième rapport ainsi que les passages inverses peuvent être réalisés en maintenant fermé le premier embrayage.

En conséquence quelle que soit la relation vérifiée par le rapport des nombres de dents du cinquième engrenage, on conserve les mêmes facilités de commande des passages de vitesses que celles décrites plus haut au paragraphe [0010].

Quelle que soit la manière de réaliser l'invention, les embrayages et le cas échéant le frein seront généralement réalisés sous forme d'organes à disques multiples, commandés hydrauliquement ou électriquement. On peut toutefois remplacer certains de ces organes par des synchroniseurs comme il est expliqué aux paragraphes [0023] et [0024]

Quelle que soit la manière de réaliser l'invention, on peut remplacer le premier embrayage ou le troisième embrayage par un synchroniseur, les autres embrayages n'étant pas remplacés par un synchroniseur.

Lorsque la boîte de vitesses objet de l'invention comporte un frein, il est possible de remplacer ce frein par un synchroniseur dont l'un des éléments est solidaire du carter et en outre, de remplacer éventuellement le troisième embrayage par un synchroniseur.

Quelle que soit la manière de réaliser l'invention, la boîte de vitesses objet de l'invention peut comporter un organe de couplage du type convertisseur de couple, dont l'impulseur est entraîné en permanence par le moteur du véhicule et dont la turbine entraîne en permanence l'arbre primaire. Ce convertisseur de couple peut être muni d'un embrayage de pontage en vue de solidariser l'impulseur et la turbine, pour éliminer tout glissement dans le convertisseur. Lorsque la boîte de vitesses objet de l'invention ne comporte pas d'organe de couplage, les commandes des deuxième et quatrième embrayages peuvent être modulables, pour assurer la progressivité des démarrages.

Quelle que soit la manière de réaliser l'invention, le dispositif d'accouplement non permanent peut être réalisé sous forme d'un accouplement à crabots. Il peut dans ce cas être combiné avec un frein de stationnement immobilisant l'un des arbres secondaires lorsque le moteur entraîne l'arbre primaire. Le dispositif d'accouplement non permanent peut aussi être réalisé sous forme d'un organe à disques multiples ou sous forme d'un synchroniseur.

Exemples de réalisation de l'invention

Les figures 1 à 5 montrent cinq exemples de réalisation de boîtes de vitesses conformes à l'invention. Sur toutes ces figures, les éléments et les organes qui sont communs à toutes ces réalisations y sont identifiés par un symbole identique.

La figure 1 montre le schéma d'une boîte de vitesses à six rapports de vitesses en marche avant, comportant quatre embrayages à disques multiples.

La figure 2 montre le schéma d'une autre boîte de vitesses à six rapports de vitesses en marche avant, comportant également quatre embrayages à disques multiples, dont les première et seconde roues principales ainsi que les troisième et quatrième roues principales coïncident. Cette boîte de vitesses diffère également de la boîte de vitesses montrée à la figure 1 par la localisation du deuxième embrayage.

La figure 3 montre le schéma d'une boîte de vitesses à huit rapports de vitesses en marche avant, comportant quatre embrayages et un frein à disques multiples.

La figure 4 montre le schéma d'une boîte de vitesses à sept rapports de vitesses en marche avant, comportant cinq embrayages à disques multiples.

La figure 5 montre le schéma d'une boîte de vitesses à neuf rapports de vitesses en marche avant, comportant cinq embrayages et un frein à disques multiples.

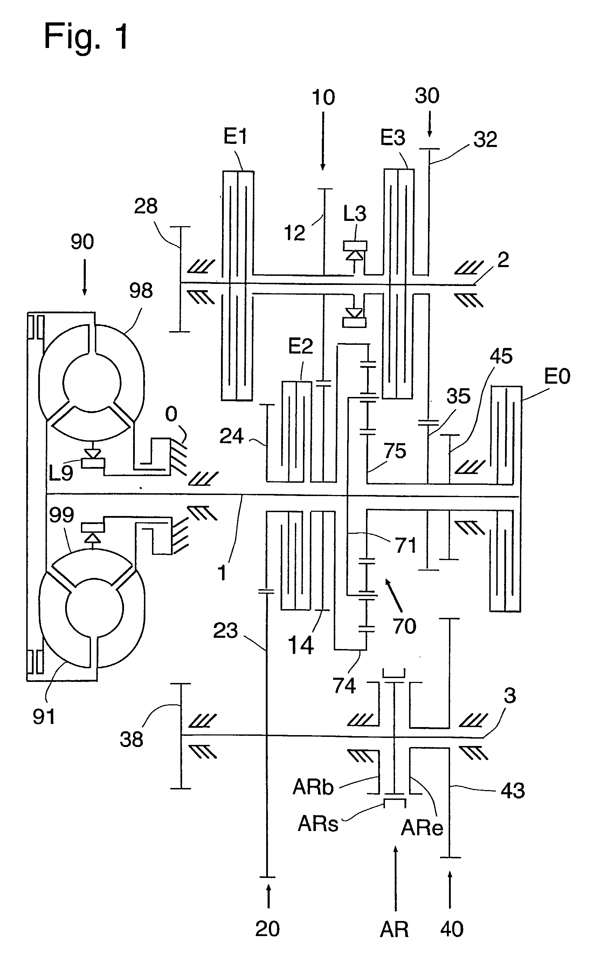

Sur la figure 1, on reconnaît :

- le convertisseur de couple 90, dont l'impulseur 98 est entraîné en permanence par le moteur non représenté. Ce convertisseur comporte en outre essentiellement la turbine 91 et le réacteur 99 qui prend appui sur le carter 0 de la boîte de vitesses par l'intermédiaire de la roue libre L9,
- l'arbre primaire 1 entraîné en permanence par la turbine 91 ;
- le premier arbre secondaire 2 et le deuxième arbre secondaire 3 ;
- le premier pignon de sortie 28 entraîné en permanence par le premier arbre secondaire 2 et le deuxième pignon de sortie 38 entraîné en permanence par le deuxième arbre secondaire 3. Ces deux pignons de sortie engrènent avec la couronne du différentiel non représentée ;
- le train planétaire à roues dentées cylindriques 70 comportant :

  - le châssis porte satellites 71, lié en permanence à l'arbre primaire 1,
  - le planétaire 75,
  - et la couronne 74 ;

- le premier engrenage à axes parallèles et à contact extérieur 10, comportant :

  - la première roue principale 14, coaxiale à l'arbre primaire 1 et liée en permanence à la couronne 74,
  - la première roue secondaire 12, coaxiale au premier arbre secondaire 2, montée folle sur cet arbre,

- le deuxième engrenage à axes parallèles et à contact extérieur 20, comportant :

  - la deuxième roue principale 24, coaxiale à l'arbre primaire 1, montée folle sur cet arbre,
  - la deuxième roue secondaire 23, coaxiale au deuxième arbre secondaire 3 et liée en permanence à cet arbre,

- le troisième engrenage à axes parallèles et à contact extérieur 30, comportant :

  - la troisième roue principale 35, coaxiale à l'arbre primaire 1 et liée en permanence au planétaire 75,
  - la troisième roue secondaire 32, coaxiale au deuxième arbre secondaire 3, montée folle sur cet arbre,

- le train d'engrenages à axes parallèles et à contact extérieur 40, comportant :

  - la quatrième roue principale 45, coaxiale à l'arbre primaire 1 et liée en permanence au planétaire 75,
  - la quatrième roue secondaire 43, coaxiale au deuxième arbre secondaire 3, montée folle sur cet arbre,

- le premier embrayage à disques multiples E1, coaxial au premier arbre secondaire 2, dont la fermeture lie la première roue secondaire 12 au premier arbre secondaire 2 ;
- le deuxième embrayage à disques multiples E2, coaxial à l'arbre primaire 1, dont la fermeture lie la deuxième roue principale 24 à la couronne 74 ;
- le troisième embrayage E3, coaxial au premier arbre secondaire 2, dont la fermeture lie la troisième roue secondaire 32 au premier arbre secondaire 2 ;
- le quatrième embrayage E0, coaxial à l'arbre primaire 1, dont la fermeture solidarise l'arbre primaire 1 et le planétaire 75 ;
- la roue libre L3, dont l'action empêche la troisième roue secondaire 32 de tourner plus vite que la première roue secondaire 12 ;
- le dispositif d'accouplement non permanent AR, réalisé sous forme d'un accouplement à crabots dont l'élément d'entrée ARe est lié à la quatrième roue secondaire 43 et dont l'élément central ARs est lié au deuxième arbre secondaire 3. Ce dispositif d'accouplement temporaire comporte en outre un troisième élément ARb lié au bâti. Lorsque l'élément central ARs n'est craboté ni à l'élément d'entrée Are, ni au troisième élément ARb, la boîte de vitesses est au point mort ou en marche avant. Lorsque l'élément central ARs est craboté à l'élément d'entrée ARe, la boîte de vitesses est au point mort ou en marche arrière. Lorsque l'élément central ARs est craboté au troisième élément du dispositif ARb, la boîte de vitesses est bloquée.

Sur cette figure 1, n'est pas représentée la roue intermédiaire du train d'engrenages à axes parallèles 40 qui est en contact en contact extérieur avec les deux autres roues (43) (45) de ce train.

Si l'on choisit comme suit les nombres de dents des roues principales et secondaires des boîtes de vitesses correspondant au schéma montré à la figure 1 :

- première roue principale : 32 dents ;
- première roue secondaire : 30 dents ;
- deuxième roue principale : 27 dents ;
- deuxième roue secondaire : 86 dents ;
- troisième roue principale : 21 dents ;
- troisième roue principale : 41 dents ;
- quatrième roue principale : 21 dents ;
- quatrième roue principale : 86 dents ;

on obtient les valeurs suivantes des rapports des engrenages correspondants : $\sigma_1 = 0{,}938$ ; $\sigma_2 = 3{,}185$ ; $\sigma_3 = 1{,}952$ ; $\sigma_4 = -4{,}095$ . En outre si le premier pignon de sortie comporte 19 dents et le second pignon de sortie 17 dents, $\sigma_0 = 1{,}118$. Pour un nombre de dents de la couronne égal à 63 et un nombre de dents du planétaire égal à 31, k = 2,032 et les rapports de vitesses correspondants sont les suivants :

| | | |
|---|---|---|
| - première vitesse | (E2 fermé et L3 bloquée) | 0,207 ; |
| - deuxième vitesse | (E2 et E0 fermés) | 0,281 ; |
| - troisième vitesse | (E2 et E3 fermés) | 0,330 : |
| - quatrième vitesse | (E0 et E3 fermés) | 0,512 ; |
| - cinquième vitesse | (E1 et E3 fermés) | 0,786 ; |
| - sixième vitesse | (E1 et E0 fermés) | 1,067 ; |
| - marche arrière | (E0 fermé et AR en action) | - 0,218. |

L'ouverture de la boîte de vitesses est égale à 5,15. Le saut maximal d'un rapport au rapport immédiatement voisin est de 1,55.

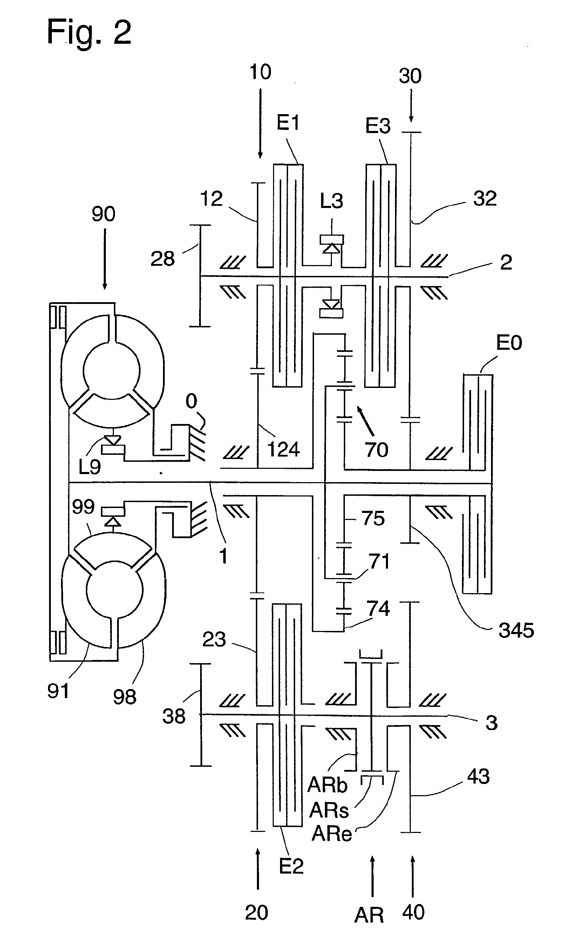

Sur la figure 2, on reconnaît les mêmes éléments et les mêmes organes que sur la figure 1, à l'exception des première et deuxième roues principales qui sont remplacées par une roue unique 124 et à l'exception des troisième et quatrième roues principales qui sont remplacées par une roue unique 345. En outre, le deuxième embrayage E2 est ici coaxial au deuxième arbre secondaire et la deuxième roue secondaire 23 est montée folle sur le deuxième arbre secondaire 3. La roue principale 124 est solidaire de la couronne 74 et la roue principale 345 est solidaire du planétaire 75. La fermeture du deuxième embrayage E2 solidarise la deuxième roue secondaire 23 au deuxième arbre secondaire 3.

Si l'on choisit comme suit les nombres de dents des roues principales et secondaires des boîtes de vitesses correspondant au schéma montré à la figure 2 :

- roue principale commune aux premier et deuxième engrenages : 27 dents ;
- première roue secondaire : 22 dents ;
- deuxième roue secondaire : 59 dents ;
- roue principale commune aux troisième et quatrième engrenages : 18 dents ;
- troisième roue secondaire : 31 dents ;
- quatrième roue secondaire : 59 dents ;

on obtient les valeurs suivantes des rapports des engrenages correspondants : $\sigma_1 = 0{,}815$ ; $\sigma_2 = 2{,}185$ ; $\sigma_3 = 1{,}722$ ; $\sigma_4 = -3{,}278$. En outre si le premier pignon de sortie comporte 23 dents et le second pignon de sortie 16 dents, $\sigma_0 = 1{,}438$. Pour un nombre de dents de la couronne égal à 63 et un nombre de dents du planétaire égal à 29, k = 2,172 et les rapports de vitesses correspondants sont les suivants :

| | | |
|---|---|---|
| - première vitesse | (E2 fermé et L3 bloquée) | 0,236 ; |
| - deuxième vitesse | (E2 et E0 fermés) | 0,318 ; |
| - troisième vitesse | (E2 et E3 fermés) | 0,371 : |
| - quatrième vitesse | (E0 et E3 fermés) | 0,581 ; |
| - cinquième vitesse | (E1 et E3 fermés) | 0,908 ; |
| - sixième vitesse | (E1 et E0 fermés) | 1,227 ; |
| - marche arrière | (E0 fermé et AR en action) | - 0,212. |

L'ouverture de la boîte de vitesses est égale à 5,21. Le saut maximal d'un rapport au rapport immédiatement voisin est de 1,56.

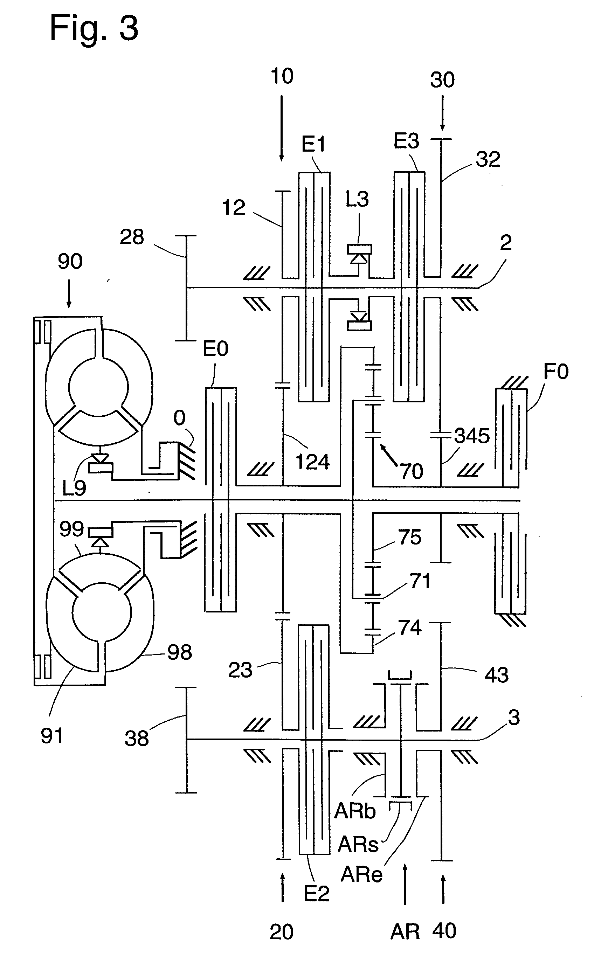

Sur la figure 3, on reconnaît les mêmes éléments et les mêmes organes que sur la figure 2, ainsi que le frein F0 localisé à l'opposé de l'organe de couplage. L'action du frein F0 immobilise la roue principale 345 commune aux troisième et quatrième engrenages à axes parallèles ainsi que le planétaire 75. Le quatrième embrayage E0 est ici localisé du côté de l'organe de couplage et sa fermeture solidarise la roue principale 124 commune aux premier et deuxième engrenages à axes parallèles ainsi que la couronne 74, avec l'arbre primaire 1.

Si l'on choisit comme suit les nombres de dents des roues principales et secondaires des boîtes de vitesses correspondant au schéma montré à la figure 3 :

- **-** roue principale commune aux premier et deuxième engrenages : 26 dents ;
- **-** première roue secondaire : 25 dents ;
- **-** deuxième roue secondaire : 59 dents ;
- **-** roue principale commune aux troisième et quatrième engrenages : 18 dents ;
- **-** troisième roue secondaire : 33 dents ;
- **-** quatrième roue secondaire : 57 dents ;

on obtient les valeurs suivantes des rapports des engrenages correspondants : $\sigma_1 = 0,962$ ; $\sigma_2 = 2,269$ ; $\sigma_3 = 1,833$ ; $\sigma_4 = -3,167$. En outre si le premier pignon de sortie comporte 22 dents et le second pignon de sortie 16 dents, $\sigma_0 = 1,375$. Pour un nombre de dents de la couronne égal à 67 et un nombre de dents du planétaire égal à 33, k = 2,030 et les rapports de vitesses correspondants sont les suivants :

| | | |
|---|---|---|
| - première vitesse | (E2 fermé et L3 bloquée) | 0,247 ; |
| - deuxième vitesse | (E2 et E0 fermés) | 0,320 ; |
| - troisième vitesse | (E2 et E3 fermés) | 0,371 : |
| - vitesse supplémentaire | (E2 et F0 fermés) | 0,478 ; |
| - quatrième vitesse | (E0 et E3 fermés) | 0,545 ; |
| - cinquième vitesse | (E1 et E3 fermés) | 0,800 ; |
| - sixième vitesse | (E1 et E0 fermés) | 1,040 ; |
| - septième vitesse | (E1 et F0 fermés) | 1,552 ; |
| - marche arrière | (E0 fermé et AR en action) | - 0,230. |

L'ouverture de la boîte de vitesses est égale à 6,29. Le saut maximal d'un rapport au rapport immédiatement voisin est de 1,49.

Si l'on choisit comme suit les nombres de dents des roues principales et secondaires des boîtes de vitesses correspondant au schéma montré à la figure 3 :

- **-** roue principale commune aux premier et deuxième engrenages : 29 dents ;
- **-** première roue secondaire : 26 dents ;
- **-** deuxième roue secondaire : 54 dents ;
- **-** roue principale commune aux troisième et quatrième engrenages : 21 dents ;
- **-** troisième roue secondaire : 34 dents ;
- **-** quatrième roue secondaire : 54 dents ;

on obtient les valeurs suivantes des rapports des engrenages correspondants :
$\sigma_1 = 0,897$ ; $\sigma_2 = 1,862$ ; $\sigma_3 = 1,619$ ; $\sigma_4 = -2,571$.
En outre si le premier pignon de sortie comporte 23 dents et le second pignon de sortie 16 dents, $\sigma_0 = 1,438$. Pour un nombre de dents de la couronne égal à 73 et un nombre de dents du planétaire égal à 33, k = 2,212 et les rapports de vitesses correspondants sont les suivants :

| | | |
|---|---|---|
| - première vitesse | (E2 fermé et L3 bloquée) | 0,299 ; |
| - deuxième vitesse | (E2 et E0 fermés) | 0,374 ; |
| - troisième vitesse | (E2 et E3 fermés) | 0,426 : |
| - vitesse supplémentaire | (E2 et F0 fermés) | 0,542 ; |
| - quatrième vitesse | (E0 et E3 fermés) | 0,618 ; |
| - cinquième vitesse | (E1 et E3 fermés) | 0,892 ; |
| - sixième vitesse | (E1 et E0 fermés) | 1,115 ; |
| - septième vitesse | (E1 et F0 fermés) | 1,620 ; |
| - marche arrière | (E0 fermé et AR en action) | - 0,271. |

- première vitesse (E2 fermé et L3 bloquée) : 0,299 ;
- deuxième vitesse (E2 et E0 fermés) : 0,374 ;
- troisième vitesse (E2 et E3 fermés) : 0,426 :
- vitesse supplémentaire (E2 et F0 fermés) : 0,542 ;
- quatrième vitesse (E0 et E3 fermés) : 0,618 ;
- cinquième vitesse (EI et E3 fermés) : 0,892 ;
- sixième vitesse (EI et E0 fermés) : 1,115 ;
- septième vitesse (E1 et F0 fermés) : 1,620 ;
- marche arrière (E0 fermé et AR en action) : - 0,271.

L'ouverture de la boîte de vitesses est égale à 5,42. Le saut maximal d'un rapport au rapport immédiatement voisin est de 1,45. En substituant au planétaire de 33 dents, un planétaire de 29 dents, les rapports en première, en troisième, en cinquième et en septième vitesses deviennent respectivement égaux à 0,304 ; 0,421 ; 0,907 ; 1,558 ; les rapports en deuxième, quatrième et sixième vitesses restant inchangés. L'ouverture de la boîte est réduite à 5,13 et le saut maximal d'un rapport au rapport infiniment voisin passe à 1,47. Toutefois le saut entre les rapports de sixième et de septième vitesses se trouve réduit de 1,45 à 1,40.

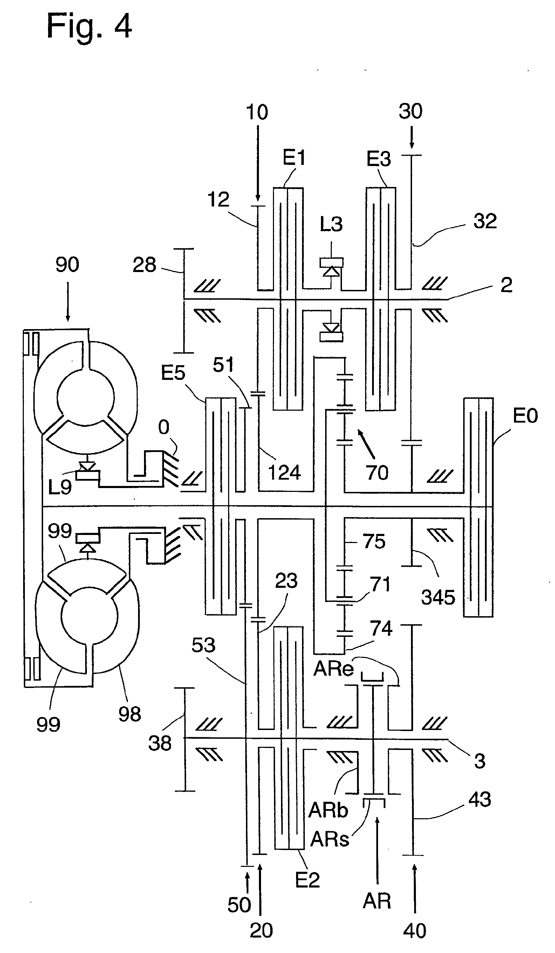

Sur la figure 4, on reconnaît les mêmes éléments et les mêmes organes que sur la figure 2. La boîte de vitesses est ici complétée par un cinquième embrayage E5 et par un cinquième engrenage 50 constitué de la cinquième roue principale 51 et de la cinquième roue secondaire 53 qui est liée au deuxième arbre secondaire 3. La fermeture du cinquième embrayage solidarise l'arbre primaire 1 et la cinquième roue principale 51 de manière à entraîner directement le deuxième arbre secondaire 3.

Si l'on choisit comme suit les nombres de dents des roues principales et secondaires des boîtes de vitesses correspondant au schéma montré à la figure 4 :

- roue principale commune aux premier et deuxième engrenages : 28 dents ;
- première roue secondaire : 31 dents ;
- deuxième roue secondaire : 91 dents ;
- roue principale commune aux troisième et quatrième engrenages : 20 dents ;
- troisième roue secondaire : 39 dents ;
- quatrième roue secondaire : 79 dents ;
- cinquième roue principale : 41 dents ;
- cinquième roue secondaire : 78 dents ;

on obtient les valeurs suivantes des rapports des engrenages correspondants :
$\sigma_1$ = 1,107 ; $\sigma_2$ = 3,250 ; $\sigma_3$ = 1,950 ; $\sigma_4$ = - 3,950 ; $\sigma_5$ = 1,902. En outre si le premier pignon de sortie comporte 23 dents et le second pignon de sortie 16 dents, $\sigma_0$ = 1,438. Pour un nombre de dents de la couronne égal à 67 et un nombre de dents du planétaire égal à 33, k = 2,030 et les rapports de vitesses correspondants sont les suivants :

| | | |
|---|---|---|
| - première vitesse | (E2 fermé et L3 bloquée) | 0,171 ; |
| - deuxième vitesse | (E2 et E0 fermés) | 0,214 ; |
| - troisième vitesse | (E2 et E3 fermés) | 0,265 : |
| - vitesse supplémentaire | (E5 et E3 fermés) | 0,366 ; |
| - quatrième vitesse | (E0 et E3 fermés) | 0,513 ; |

(suite)

| | | |
|---|---|---|
| - cinquième vitesse | (E1 et E3 fermés) | 0,722 ; |
| - sixième vitesse | (E1 et E0 fermés) | 0,903 ; |
| - marche arrière | (E0 fermé et AR en action) | - 0,176. |

L'ouverture de la boîte de vitesses est égale à 5,28. Le saut maximal d'un rapport au rapport immédiatement voisin est de 1,41. On observera que lors des passages de la troisième à la quatrième vitesse ou de la cinquième à la quatrième vitesse ainsi que lors des passages inverse, le troisième embrayage E3 peut être maintenu fermé.

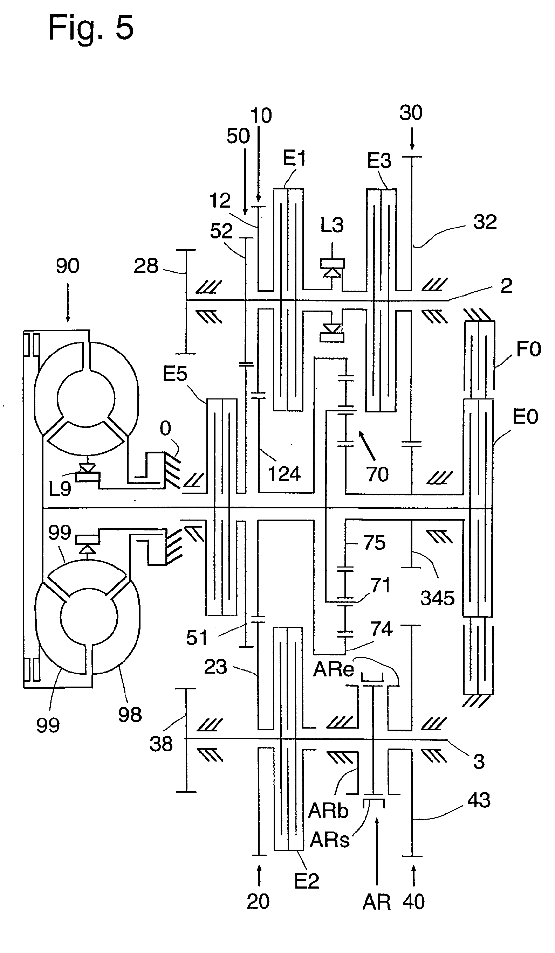

Sur la figure 5, on reconnaît les mêmes éléments et les mêmes organes que sur la figure 2. La boîte de vitesses est ici complétée par un frein à disques multiples F0, par un cinquième embrayage E5 et par un cinquième engrenage 50 constitué de la cinquième roue principale 51 et de la cinquième roue secondaire 52 qui est liée au premier arbre secondaire 2. La fermeture du cinquième embrayage solidarise l'arbre primaire 1 et la cinquième roue principale 51 de manière à entraîner directement le premier arbre secondaire 2. L'action du frein F0 immobilise le planétaire 75.

Si l'on choisit comme suit les nombres de dents des roues principales et secondaires des boîtes de vitesses correspondant au schéma montré à la figure 5 :

- **-** roue principale commune aux premier et deuxième engrenages : 28 dents ;
- **-** première roue secondaire : 31 dents ;
- **-** deuxième roue secondaire : 71 dents ;
- **-** roue principale commune aux troisième et quatrième engrenages : 20 dents ;
- **-** troisième roue secondaire : 39 dents ;
- **-** quatrième roue secondaire : 71 dents ;
- **-** cinquième roue principale : 31 dents ;
- **-** cinquième roue secondaire : 28 dents ;

on obtient les valeurs suivantes des rapports des engrenages correspondants :

$\sigma_1 = 1,107$ ; $\sigma_2 = 2,536$ ; $\sigma_3 = 1,950$ ; $\sigma_4 = -3,550$ ; $\sigma_5 = 0,903$. En outre si le premier pignon de sortie comporte 20 dents et le second pignon de sortie 16 dents, $\sigma_0 = 1,250$. Pour un nombre de dents de la couronne égal à 67 et un nombre de dents du planétaire égal à 35, k = 1,914 et les rapports de vitesses correspondants sont les suivants :

| | | |
|---|---|---|
| - première vitesse | (E2 fermé et L3 bloquée) | 0,250 ; |
| - deuxième vitesse | (E2 et E0 fermés) | 0,315 ; |
| - troisième vitesse | (E2 et E3 fermés) | 0,363 : |
| - vitesse supplémentaire | (E2 et F0 fermés) | 0,480 ; |
| - quatrième vitesse | (E0 et E3 fermés) | 0,513 ; |
| - cinquième vitesse | (E1 et E3 fermés) | 0,716 ; |
| - sixième vitesse | (E1 et E0 fermés) | 0.903 ; |
| - septième vitesse | (E1 et F0 fermés) | 1,107 ; |
| - huitième vitesse | (E1 et F0 fermés) | 1,375 ; |
| - marche arrière | (E0 fermé et AR en action) | - 0,225. |

L'ouverture de la boîte de vitesses est égale à 5,50. Le saut maximal d'un rapport au rapport immédiatement voisin est de 1,41. On observera que lors des passages de la sixième à la septième vitesse ou de la huitième à la sixième vitesse ainsi que lors des passages inverse, le premier embrayage E1 peut être maintenu fermé.

Pour tous les exemples de réalisation de boîtes de vitesses donnés ci-dessus aux paragraphes [0033] à [0043], on peut observer, quels que soient les choix opérés pour les nombres de dents des roues dentées, à condition qu'ils soient raisonnables, c'est-à-dire qu'ils ne conduisent ni à une ouverture de boîte trop faible, ni à un saut maximal trop important entre deux rapports immédiatement voisins, que les sauts entre le premier et le deuxième rapport d'une part et entre le deuxième et troisième rapport d'autre part restent toujours modérés. Ceci réduit l'écart entre les couples transmis avant et après les changements de vitesses et diminue la brutalité des passages de vitesses, lors d'accélérations importantes. Il en résulte un avantage caractéristique des boîtes de vitesses conformes à l'invention et cet avantage n'est pas exclusif d'une grande ouverture de boîte.

**Revendications**

1. Boîte de vitesses pour véhicule automobile comportant outre un carter (0) et des moyens de guidage :

   - un arbre primaire (1) susceptible d'être entraîné par le moteur du véhicule, le plus souvent par l'intermédiaire d'un organe de couplage ;
   - un premier et un deuxième arbres secondaires (2) (3) d'axes parallèles à l'axe de l'arbre primaire (1) ;
   - un premier et un deuxième pignons de sortie, le premier pignon de sortie (28) étant entraîné en permanence par le premier arbre secondaire (2) et le deuxième pignon de sortie (38) étant entraîné en permanence par le deuxième arbre secondaire (3), le rapport du nombre de dents du premier pignon de sortie au nombre de dents du deuxième pignon de sortie étant désigné par $\sigma_0$ ;
   - un train planétaire à roues dentées cylindriques (70), coaxial à l'arbre primaire (1), constitué de trois organes indépendants, un planétaire (75), une couronne (74) et un châssis porte satellites (71), de vitesses respectives $\omega_1$, $\omega_2$ et $\omega_3$, satisfaisant la relation cinématique suivante :

$$\omega_1 + k.\omega_2 = (1+ k).\omega_3,$$

   dans laquelle k désigne le rapport du nombre de dents de la couronne au nombre de dents du planétaire ;
   - trois engrenages à axes parallèles et à contact extérieur,

       - le premier engrenage (10) étant constitué d'une roue coaxiale à l'arbre primaire (1), dite première roue principale (14) et d'une roue coaxiale au premier arbre secondaire (2), dite première roue secondaire (12), le rapport du nombre de dents de la première roue secondaire au nombre de dents de la première roue principale étant désigné par $\sigma_1$ ;

       - le deuxième engrenage (20) étant constitué d'une roue coaxiale à l'arbre primaire (1), dite deuxième roue principale (24) et d'une roue coaxiale au deuxième arbre secondaire (3), dite deuxième roue secondaire (23), le rapport du nombre de dents de la deuxième roue secondaire au nombre de dents de la deuxième roue principale étant désigné par $\sigma_2$ ;

       - le troisième engrenage (30) étant constitué d'une roue coaxiale à l'arbre primaire (1), dite troisième roue principale (35) et d'une roue coaxiale au premier arbre secondaire (2), dite troisième roue secondaire (32), le rapport du nombre de dents de la troisième roue secondaire au nombre de dents de la troisième roue principale étant désigné par $\sigma_3$ ;

   - un train d'engrenages à axes parallèles (40), constitué d'une roue coaxiale à l'arbre primaire (1), dite quatrième roue principale (45), d'une roue coaxiale à l'un des arbres secondaires (3), dite quatrième roue secondaire (43), et d'une roue d'axe parallèle aux axes des arbres primaires et secondaires, dite roue intermédiaire, susceptible d'engrener simultanément par contact extérieur avec la quatrième roue principale (45) et avec la quatrième roue secondaire (43), le rapport changé de signe, du nombre de dents de la quatrième roue secondaire au nombre de dents de la quatrième roue principale étant désigné par $\sigma_4$ ;
   - quatre embrayages (E1) (E2) (E3) (E0) ;
   - un dispositif d'accouplement non permanent (AR) ;
   - une roue libre (L3) ;

   **caractérisée en ce que** :

   - l'arbre primaire (1) entraîne en permanence le châssis porte satellites (71) ;
   - la première roue principale (14) est entraînée par la couronne (74), la première roue secondaire (12) entraîne l'organe d'entrée du premier embrayage (E1), l'organe de sortie de cet embrayage est solidaire du premier arbre secondaire (2) ;
   - la troisième roue principale (35) est entraînée par le planétaire (75), la troisième roue secondaire (32) entraîne l'organe d'entrée du troisième embrayage (E3), l'organe de sortie de cet embrayage est solidaire du premier arbre secondaire (2) ;
   - la roue libre (L3) limite la vitesse de rotation de la troisième roue secondaire (32) à la vitesse de rotation de la première roue secondaire (12) ;
   - la fermeture du deuxième embrayage (E2) assure l'entraînement du deuxième arbre secondaire (3) à partir de la couronne (74), par l'intermédiaire du deuxième engrenage à axes parallèles (20) ;

- la fermeture du quatrième embrayage (E0) solidarise en rotation deux des organes du train planétaire ;
- l'action du dispositif d'accouplement non permanent (AR) assure l'entraînement de l'un des arbres secondaires (3) à partir de l'un des organes indépendants du train planétaire autre que le porte satellites, par l'intermédiaire du quatrième engrenage à axes parallèles (40) ;
- les nombres de dents des roues des engrenages à axes parallèles sont choisis pour satisfaire la relation suivante : $\sigma_1 < \sigma_3 < \Sigma_2 = \sigma_2.\sigma_0$ ;

de manière à former sept chemins de puissance au départ de l'arbre primaire (1) vers l'un au moins des pignons de sortie (28) (38),

- un premier chemin de puissance étant obtenu par la fermeture du deuxième embrayage (E2) ainsi que par l'action de la roue libre (L3), et fournissant un premier rapport de vitesses en marche avant égal à $(k+1).[\sigma_1/\Sigma_2] / (k.\sigma_1+\sigma_3)$ ;
- un deuxième chemin de puissance étant obtenu par les fermetures du deuxième embrayage (E2) ainsi que du quatrième embrayage (E0) et fournissant un deuxième rapport de vitesses en marche avant égal à $(1/\Sigma_2)$ ;
- un troisième chemin de puissance étant obtenu par les fermetures du deuxième embrayage (E2) ainsi que du troisième embrayage (E3) et fournissant un troisième rapport de vitesses en marche avant égal à $(k+1) / (k. \Sigma_2+\sigma_3)$ ;
- un quatrième chemin de puissance étant obtenu par les fermetures du quatrième embrayage (E0) ainsi que du troisième embrayage (E3) et fournissant un quatrième rapport de vitesses en marche avant égal à $(1/\sigma_3)$ ;
- un cinquième chemin de puissance étant obtenu par les fermetures du troisième embrayage (E3) et du premier embrayage (E1) ainsi que par l'action de la roue libre (L3), ce chemin de puissance se dédoublant entre le train planétaire et le premier arbre secondaire (2) et fournissant un cinquième rapport de vitesses en marche avant égal à $(k+1) / (k.\sigma_1+\sigma_3)$ ;
- un sixième chemin de puissance étant obtenu par les fermetures du premier embrayage (E1) ainsi que du quatrième embrayage (E0) et fournissant un sixième rapport de vitesses en marche avant égal à $(1/\sigma_1)$ ;
- un septième chemin de puissance étant obtenu par la fermeture du quatrième embrayage (E0) ainsi que par l'action du dispositif d'accouplement non permanent (AR) et fournissant un rapport de vitesses en marche arrière égal à $(1/\Sigma_4)$, avec $\Sigma_4 = \sigma_4$ ou $\Sigma_4 = \sigma_4.\sigma_0$ selon que le premier pignon de sortie (28) ou le deuxième pignon de sortie (38) est le terme de ce chemin ;

tout rapport de vitesses étant défini comme le rapport de la vitesse du premier pignon de sortie à la vitesse de l'arbre primaire.

2. Boîte de vitesses conforme à la revendication 1, **caractérisée en ce que** la deuxième roue principale s'identifie à la première roue principale (124), la deuxième roue secondaire (23) entraîne l'organe d'entrée du deuxième embrayage (E2), l'organe de sortie du deuxième embrayage est solidaire du deuxième arbre secondaire (3).

3. Boîte de vitesses conforme à l'une des revendications précédentes, **caractérisée en ce que** la quatrième roue principale s'identifie à la troisième roue principale (345), la quatrième roue secondaire (43) entraîne l'organe d'entrée du dispositif d'accouplement non permanent (AR), l'organe de sortie du dispositif d'accouplement non permanent est solidaire du deuxième arbre secondaire (3).

4. Boîte de vitesses conforme à l'une des revendications précédentes, **caractérisée en ce qu'**elle comporte en outre un frein (F0) dont l'action assure le blocage du planétaire (75), de manière à fournir deux chemins de puissance supplémentaires vers les pignons de sortie (28) (38), l'un de ces chemins de puissance supplémentaires étant obtenu par l'action du frein (F0) ainsi que par la fermeture du premier embrayage (E1) et fournissant un rapport de vitesses en marche avant égal à $(k+1) / (k.\sigma_1)$, l'autre chemin de puissance supplémentaire étant obtenu par l'action du frein (F0) ainsi que par la fermeture du deuxième embrayage (E2) et fournissant un autre rapport de vitesses en marche avant égal à $(k+1) / (k.\Sigma_2)$.

5. Boîte de vitesses conforme à l'une des revendications précédentes, **caractérisée en ce qu'**elle comporte en outre :

- un cinquième engrenage à axes parallèles et à contact extérieur (50) dont l'une des roues (51) dite cinquième roue principale est coaxiale à l'arbre primaire (1) et dont l'autre roue dite cinquième roue secondaire (53) est coaxiale à l'un des arbres secondaires (3), le rapport du nombre de dents de la cinquième roue secondaire au nombre de dents de la cinquième roue principale étant désigné par $\sigma_5$ ;

- ainsi qu'un cinquième embrayage (E5) dont la fermeture assure l'entraînement de l'arbre secondaire qui porte la cinquième roue secondaire, à partir de l'arbre primaire (1), par l'intermédiaire de ce cinquième engrenage (50) ;

de manière à fournir un chemin de puissance supplémentaire vers l'un des pignons de sortie, ce chemin de puissance étant obtenu par l'action du cinquième embrayage (E5) et fournissant un rapport de vitesses en marche avant égal à $(1/\Sigma_5)$, avec $\Sigma_5 = \sigma_5$ ou $\Sigma_5 = \sigma_5.\sigma_0$ selon que le premier pignon de sortie (28) ou le deuxième pignon de sortie (38) est le terme de ce chemin ; les nombres de dents des roues formant ce cinquième engrenage étant choisis de préférence pour satisfaire l'une des deux relations suivantes : $\Sigma_5 < \sigma_1$ ou $\sigma_3 < \Sigma_5 < [(k.\Sigma_2 + \sigma_3)/ (k+1)]$.

6. Boîte de vitesses conforme à l'une des revendications précédentes, **caractérisée en ce que** le premier (E1) ou le troisième embrayage (E3) est remplacé par un synchroniseur, les autres embrayages n'étant pas remplacés par un synchroniseur.

7. Boîte de vitesses conforme à la revendication 4, **caractérisée en ce que** le frein (F0) est remplacé par un synchroniseur dont l'un des éléments est solidaire du carter, le troisième embrayage (E3) étant éventuellement remplacé par un synchroniseur.

8. Boîte de vitesses conforme à l'une des revendications précédentes, **caractérisée en ce qu'**elle comporte un organe de couplage du type convertisseur de couple (90) dont l'impulseur (98) est entraîné en permanence par le moteur du véhicule et dont la turbine (91) entraîne en permanence l'arbre primaire (1).

9. Boîte de vitesses conforme à l'une des revendications 1 à 7, **caractérisée en ce qu'**elle ne comporte pas d'organe de couplage, les commandes du deuxième (E2) et du quatrième (E0) embrayages étant modulables pour assurer la progressivité des démarrages.

10. Boîte de vitesses conforme à l'une des revendications précédentes, **caractérisée en ce que** le dispositif d'accouplement non permanent (AR) est un accouplement à crabots.

# Fig. 1

Fig. 2

EP 1 233 208 A1

16

# Fig. 3

# Fig. 4

# Fig. 5

**Office européen des brevets**

**RAPPORT DE RECHERCHE EUROPEENNE**

Numéro de la demande

EP 02 29 0348

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 342 258 A (MARK J. EGYED) 30 août 1994 (1994-08-30) * abrégé * * colonne 19, ligne 12 - colonne 21, ligne 47 * * colonne 23, ligne 1 - colonne 27, ligne 40 * * colonne 83, ligne 38 - colonne 85, ligne 45; figures 3-5,60-64 * | 1-10 | F16H3/66 |
| A | EP 0 433 619 A (FORD-WERKE AKTIENGESELLSCHAFT ET AL.) 26 juin 1991 (1991-06-26) * abrégé * * colonne 7, ligne 55 - colonne 9, ligne 52; figures 5,6 * | 1-10 | |
| A | DE 35 17 142 A (ZAHNRADFABRIK FRIEDRICHSHAFEN AG) 28 novembre 1985 (1985-11-28) * abrégé * * page 11, ligne 1 - ligne 22; figures 1,2 * | 1,4,5, 8-10 | DOMAINES TECHNIQUES RECHERCHES (Int.Cl.7) F16H |
| A,D | US 5 106 352 A (PIERRE A.G. LEPELLETIER) 21 avril 1992 (1992-04-21) * abrégé * * colonne 4, ligne 47 - colonne 5, ligne 26 * * colonne 7, ligne 51 - colonne 8, ligne 22; figures 1,7 * | 1,8-10 | |

Le présent rapport a été établi pour toutes les revendications

| Lieu de la recherche | Date d'achèvement de la recherche | Examinateur |
|---|---|---|
| BERLIN | 17 mai 2002 | Cuny, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 02 29 0348

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-05-2002

| Document brevet cité au rapport de recherche | | Date de publication | Membre(s) de la famille de brevet(s) | | Date de publication |
|---|---|---|---|---|---|
| US 5342258 | A | 30-08-1994 | WO | 9607040 A1 | 07-03-1996 |
| EP 0433619 | A | 26-06-1991 | US | 5039305 A | 13-08-1991 |
| | | | DE | 69011823 D1 | 29-09-1994 |
| | | | DE | 69011823 T2 | 05-01-1995 |
| | | | EP | 0433619 A2 | 26-06-1991 |
| DE 3517142 | A | 28-11-1985 | AU | 577608 B2 | 29-09-1988 |
| | | | AU | 4543885 A | 31-12-1985 |
| | | | CA | 1236997 A1 | 24-05-1988 |
| | | | DE | 3517142 A1 | 28-11-1985 |
| | | | WO | 8505666 A1 | 19-12-1985 |
| | | | EP | 0214989 A1 | 25-03-1987 |
| | | | ES | 542858 D0 | 01-04-1986 |
| | | | ES | 8605321 A1 | 16-08-1986 |
| | | | JP | 61502274 T | 09-10-1986 |
| | | | US | 4817462 A | 04-04-1989 |
| | | | ZA | 8503198 A | 24-12-1985 |
| US 5106352 | A | 21-04-1992 | FR | 2656055 A1 | 21-06-1991 |
| | | | DE | 69010472 D1 | 11-08-1994 |
| | | | DE | 69010472 T2 | 16-03-1995 |
| | | | EP | 0434525 A1 | 26-06-1991 |
| | | | JP | 4219553 A | 10-08-1992 |

EPO FORM P0460

Pour tout renseignement concernant cette annexe : voir Journal Officiel de l'Office européen des brevets, No.12/82